Europäisches Patentamt

**European Patent Office**

**Office européen des brevets**

(11) Veröffentlichungsnummer: **0 187 969**

**A1**

(12) EUROPÄISCHE PATENTANMELDUNG

(21) Anmeldenummer: 85115914.5

(51) Int. Cl.⁴: **H 04 J 1/06**

(22) Anmeldetag: 13.12.85

(30) Priorität: 19.12.84 HU 471984

(43) Veröffentlichungstag der Anmeldung:
23.07.86 Patentblatt 86/30

(84) Benannte Vertragsstaaten:
AT DE FR GB SE

(71) Anmelder: TELEFONGYAR
Hungária körut 126-132
H-1143 Budapest(HU)

(72) Erfinder: Bako, István
Fráter Loránd utca 57
H-1185 Budapest(HU)

(72) Erfinder: Füzy, Vilmos
Várfok utca 2/b
H-1012 Budapest(HU)

(72) Erfinder: Molnár, György
Sólyom László utca 23
H-1025 Budapest(HU)

(72) Erfinder: Nyéki, István
Gizella utca 32
H-1043 Budapest(HU)

(72) Erfinder: Szabo, Ilona
Oltvány utca 21771/1
H-1112 Budapest(HU)

(72) Erfinder: Tarján, Mária
Baross utca 117
H-1083 Budapest(HU)

(74) Vertreter: Patentanwälte Viering & Jentschura
Steinsdorfstrasse 6
D-8000 München 22(DE)

(54) **Schaltungsanordnung zur Erzeugung von Systemträgersignalen, Linienpilotfrequenzen und Kanalträger-Steuerfrequenzen vielkanäliger Freileitungs-Fernsprechanlagen.**

(57) Die Erfindung betrifft eine Schaltungsanordnung zur Erzeugung von Systemträgern, Linienpilotfrequenzen vielkanäliger Freileitungs-Trägerstrom-Fernsprechanlagen, die aus einem einzigen Oszillator, einer sich an dessen Ausgang anschliessenden Kombination von Frequenzteilern, sich dem Ausgang der Frequenzteiler anschliessenden Filtern, sowie an die Ausgänge von Modulatoren angeschlossenen Filtern oder mit dem Ausgang des Filters verbundenen Frequenzteilern besteht, wobei die Ausgänge der einzelnen Frequenzteiler unmittelbar oder über Filter an Kanalträger-Steuerfrequenzausgänge oder an Systemträger- bzw. Unterbandpilotfrequenzausgänge angeschlossen sind.

Das Wesen der Erfindung besteht darin, dass die Kombinationen der Frequenzteiler an Oberbandsystemträgerfrequenzen /$F_{B1}$...$F_{B4}$/ erzeugende Schaltungen umkoppelbar und an Oberbandpilotfrequenzen /$P_{B1}$, $P_{B2}$/ erzeugende Schaltungen fest angeschlossen sind, dass weiterhin die die Systemträgerfrequenzen /$F_{B1}$ ... $F_{B4}$/ erzeugenden Schaltungen aus einer Reihenschaltung eines Filters /SZ4/, eines Modulators /M2/, eines weiteren Filters /SZ5/ und eines Frequenzteilers /D11/ mit einem Teilerverhältnis von 2:1 bestehen, während eine, die eine Oberbandpilotfrequenz /$P_{B1}$/ erzeugende Reihenschaltung mit einem Filter /SZ6/, einem Modulator /M3/ und einem weiteren Filter /SZ7/ versehen ist, während eine, die andere Oberbandpilotfrequenz /$P_{B2}$/ erzeugende Reihenschaltung aus einem Filter /SZ8/, einem Modulator /M4/ und einem weiteren Filter /SZ9/ besteht.

./...

Fig. 3

SCHALTUNGSANORDNUNG ZUR ERZEUGUNG VON SYSTEMTRÄGER-
SIGNALEN, LINIENPILOTFREQUENZEN UND KANALTRÄGER-STEUER-
FREQUENZEN VIELKANÄLIGER FREILEITUNGS-FERNSPRECHANLAGEN

Die Erfindung betrifft eine Schaltungsanordnung zur Erzeugung von Systemträgersignalen, Linienpilotfrequenzen und Kanalträger-Steuerfrequenzen vielkanäliger Freileitungs-Fernsprechanlagen.

Zur Systemmodulation von Freileitungs-Trägerstromanlagen ist - im Verhältnis zu sonstigen Systemen - eine grosse Anzahl von Trägerfrequenzen zu erzeugen, da gemäss den CCITT-Empfehlungen innerhalb eines Linienbandes die Realisierung von verschiedenen Frequenzzuteilungen erforderlich ist.

Das Freileitungssystem mit grösster Kanalanzahl ist ein 12-kanäliges System, bei dem zur Übertragung sieben Systemträgerfrequenzen und vier Pilotfrequenzen zu erzeugen sind.

Unter den Trägerfrequenzen befinden sich solche, die kein Vielfaches von 4 kHz sind, diese sind ausgehend von 4 kHz unmittelbar nicht erzeugbar.

Wie bekannt sind die verschiedenen Vorrichtungen zur Erzeugung der Trägerfrequenzen aus hochstabilen Oszillatoren, Frequenzvervielfachern, Frequenzteilern, Modulatoren, Filtern und Verstärkern aufgebaut. Diese Schaltungen passen sich in verschiedenem Mass an die moderne Technologie an. Am besten und billigsten lassen sich die Frequenzteiler handhaben, die Herstellung der Filter und Thermostate ist kompliziert und aufwendig. Infolgedessen ist bei der Bewertung des technisch-ökonomischen Niveaus einer Vorrichtung ausschlaggebend, in welcher Anzahl und Verteilung die erwähnten Schaltungen vorkommen.

A 3449-38 KCs

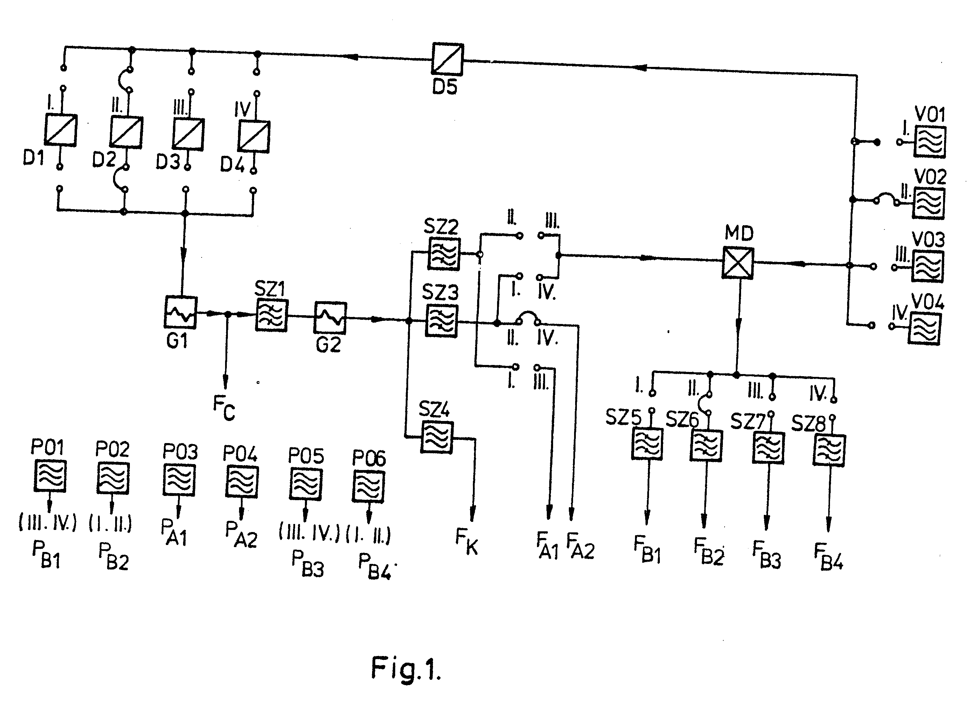

Bei den, zum Stand der Technik gehörenden bekannten Lösungen ist die Trägerversorgungseinheit /siehe im weiteren bei der Beschreibung von Fig. 1/ derart ausgebildet, dass in Abhängigkeit von der Zuteilung der vier verschiedenen Frequenzen einer der verschiedenen Steueroszillatoren an den Modulator, sowie an den Frequenzvervierfacher angeschlossen ist.

Das vervierfachte Signal wird an Frequenzteiler mit verschiedenem Teilerverhältnis geleitet. An dem Ausgang des Teilers erscheint immer eine Impulsreihe von 4 kHz, die den ersten harmonischen Generator steuert. Die dritte harmonische Schwingungsfrequenz wird von einem Bandfilter ausgewählt. Der zweite harmonische Generator schliesst sich dem Ausgang des Bandfilters an. Der Kanalträgerfrequenzausgang ist ebenfalls an den Ausgang des ersten harmonischen Generators angeschlossen. An den Ausgängen der weiteren Bandfilter erscheinen die verschiedenen Systemträgerfrequenzen, von denen eine auch an den Modulator gegeben werden kann, der diese mit dem Ausgangssignal eines der Steueroszillatoren mischt. Aus dem Ausgangsspektrum des Modulators werden entsprechend der Linienfrequenzzuteilung die verschiedenen Signalband-Systemträger über ein Bandfilter ausgewählt. Die Pilotfrequenzen werden durch gesonderte Oszillatoren erzeugt.

Gemäss der, ebenfalls zum Stand der Technik gehörenden Lösung aus der HU-PS 179348 ist es möglich, alle erforderlichen Frequenzen aus dem Signal eines einzelnen Oszillators zu erzeugen. Das Wesen dieser Lösung besteht darin, dass an den Ausgang des Steueroszillators eine Kombination von Frequenzteilern angeschlossen ist, während einige Systemträgersignale und Pilotfrequenzen sowie der Kanalträger-Steuerfrequenzausgang unmittelbar mit dem Ausgang der Frequenzteiler verbunden sind. Weitere Systemträger und Pilotfrequenzen

0187969

werden mittels Modulation erzeugt. Die Ausgangsverstärker werden bei den oben erläuterten, zu dem Stand der Technik gehörenden Schaltungsanordnungen, sowie bei der Beschreibung der erfindungsgemässen Schaltungsanordnung nicht erläutert und dargestellt, da diese nicht als Systemmerkmale betrachtet werden.

Bei der zuerst erwähnten Schaltungsanordnung ist von Nachteil, dass diese viele Oszillatoren enthält. Das frequenzbestimmende Element- Quarzkristall - der Oszillatoren ist in einem Thermostat unterzubringen, wodurch die Lösung sehr aufwendig wird. Die erforderliche Frequenzgenauigkeit kann nur umständlich gewährleistet werden.

Der Nachteil der als zweite erwähnten Lösung besteht darin, dass eine grosse Anzahl von Bauelementen erforderlich ist, wodurch die Realisierung der Schaltungsanordnung sehr kompliziert und aufwendig wird. Besonders nachteilig ist, dass die vier verschiedenen Systemträgersignale $F_{B1} \ldots F_{B4}$ mittels vier verschiedener Schaltungen erzeugt werden, das eine unwirtschaftliche Lösung darstellt.

Das Ziel der Erfindung besteht in der Entwicklung einer Schaltungsanordnung zur Erzeugung von Trägersignalen, die den strengsten Anforderungen, den Anforderungen der Realisierbarkeit mit moderner Herstellungs- und Montagetechnologie genügt und von den oben beschriebenen Nachteilen der bekannten Lösungen frei ist. Die durch die Erfindung zu lösende Aufgabe besteht darin, eine Schaltungsanordnung zur Erzeugung von Trägersignalen zu entwickeln, die Systemträgersignale, Linienpilotsignale, und Kanalträger-Steuerfrequenzen 12-känäliger Freileitungsträgerstrom-Anlagen aus dem Signal eines einzigen Oszillators derart erzeugt, dass gleichzeitig die Anzahl der verwendeten Teilschaltungen bedeutend verringert wird, wobei die Teilschaltungen einen derart einfachen Aufbau besitzen, dass diese während der Herstellung im voraus einstellbar sind.

Die erfindungsgemässe Lösung beruht auf der Erkenntnis, dass von den sieben Systemträgerfrequenzen gleichzeitig nur vier erforderlich sind, die mittels einer umkoppelbaren Schaltung erzeugt werden. Die erfindungsgemässe Lösung führt zu einer Vereinfachung der Schaltung sowie zur Kostenverringerung. Das ist sowohl in Hinsicht auf die Herstellung als auch in Hinsicht auf die Verwertung vorteilhaft. Es ist nicht erforderlich, die auf der gleichen Kolonnenreihe betriebenen fremden Systeme zu kennen, die in Hinsicht auf das Nebensprechen günstigste Linienfrequenzlage ist an Ort und Stelle einstellbar.

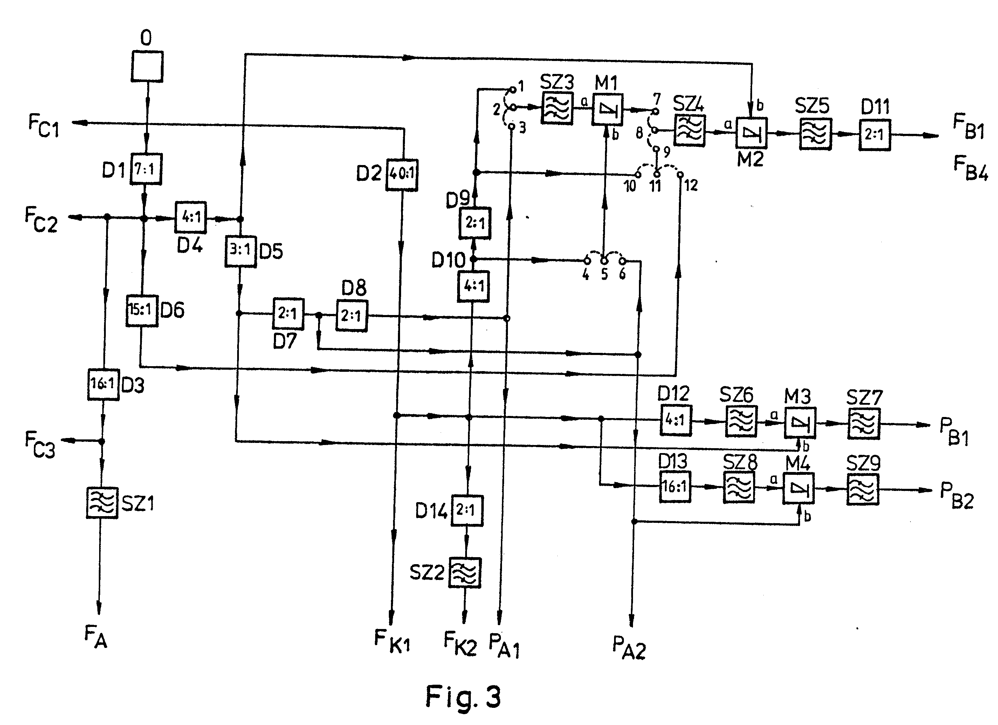

Das Wesen der erfindungsgemässen Lösung besteht im Folgenden: /eine nähere Erläuterung erfolgt im Weiteren bei der Beschreibung von Fig. 3/

Die Mittelfrequenz-Systemträgerfrequenz $F_{K1}$, die Unterbandpilotfrequenzen $P_{A1}$, $P_{A2}$, die Kanalträger-Steuerfrequenzen /$F_{c1}$, $F_{c2}$, $F_{c3}$/, sowie die zur Erzeugung der Oberbandsystemträger und Oberbandpilotfrequenzen erforderlichen Hilfsfrequenzen werden aus dem Signal eines einzigen Oszillators unmittelbar durch eine ganzzahlige Teilung erzeugt. Der Unterbandsystemträger $F_A$ und der Mittelfrequenzsystemträger $F_{k2}$ werden ebenfalls durch Teilung erzeugt, aus dem Vierecksignal wird jedoch nicht die erste Harmonische sondern die dritte Harmonische ausgefiltert. Die Oberbandsystemträger $F_{B1}$, $F_{B2}$, $F_{B3}$, $F_{B4}$ und die Oberbandpilotfrequenzen $P_{F1}$, $P_{F2}$ werden aus den, durch Teilung bereits erzeugten Frequenzen und Hilfssignalen durch Modulation erzeugt. Hilfssignale sind Signale mit einer solchen Frequenz, die das System nicht verlassen, jedoch zur Erzeugung der Ausgangsfrequenzen erforderlich sind.

Zum Wesen der Erfindung gehört, dass das Tastverhältnis des Ausgangssignales derjenigen Frequenzteiler, bei denen sich dem Ausgang des Teilers ein Filter anschliesst und der Filter nicht die erste Harmonische ausfiltert, 0,5 beträgt /ein 1:1 Viereksignal am Ausgang, das nur die ungeradzahligen Harmonischen beinhaltet/. Eine Ausnahme stellt der 15:1 Frequenzteiler D 6 dar, bei dem das sich anschliessende Filter SZ4 die erste Harmonische ausfiltert. Die Filter sind dadurch vereinfacht, dass ihr Viereksignalspektrum mit dem Tastverhältnis 1:1 theoretisch keine geradzahligen Harmonischen des Basissignals enthält.

Fig. 1  zeigt ein Blockschema einer bekannten Vorrichtung zur Erzeugung von Trägersignalen.

Fig. 2  zeigt eine solche Lösung, bei der alle Frequenzen aus dem Signal eines einzigen Oszillators erzeugt werden, während

Fig. 3  die erfindungsgemässe Lösung veranschaulicht.

Gemäss Fig. 1 gelangt das Signal des Oszillators VO1, oder des Oszillators VO2, oder des Oszillators VO3, oder des Oszillators VO4 in Abhängigkeit von den vier verschiedenen, mit I. II. III. und IV. gekennzeichneten Linienfrequenzzuteilungen an den Modulator MD und an den Frequenzvervierfacher D5.

Das vierfache Signal wird an die Frequenzteiler D1, oder D2 oder D3 oder D4 geleitet. /Bei dem Oszillator VO1 an den Frequenzteiler D1, bei dem Oszillator VO2 an den Frequenzteiler D2, usw./. An dem Ausgang des Teilers erscheint in jedem Falle eine Impulsreihe mit einer Frequenz von 4 kHz, die einen harmonischen Generator G1 steuert, aus dessen Ausgangsspektrum ein Bandfilter SZ1 die dritte Harmonische ausfiltert. Aus dem Spektrum des an einen Ausgang des Bandfilters SZ1 angeschlossenen harmonischen Generators G2 wählen das Bandfilter SZ4 den Mittelfrequenz-Systemträger $F_k$, das Bandfilter SZ2 bzw. das Bandfilter SZ3 den Unterbandsystemträger $F_{A1}$ bzw.

den Unterbandsystemträger $F_{A2}$ aus.

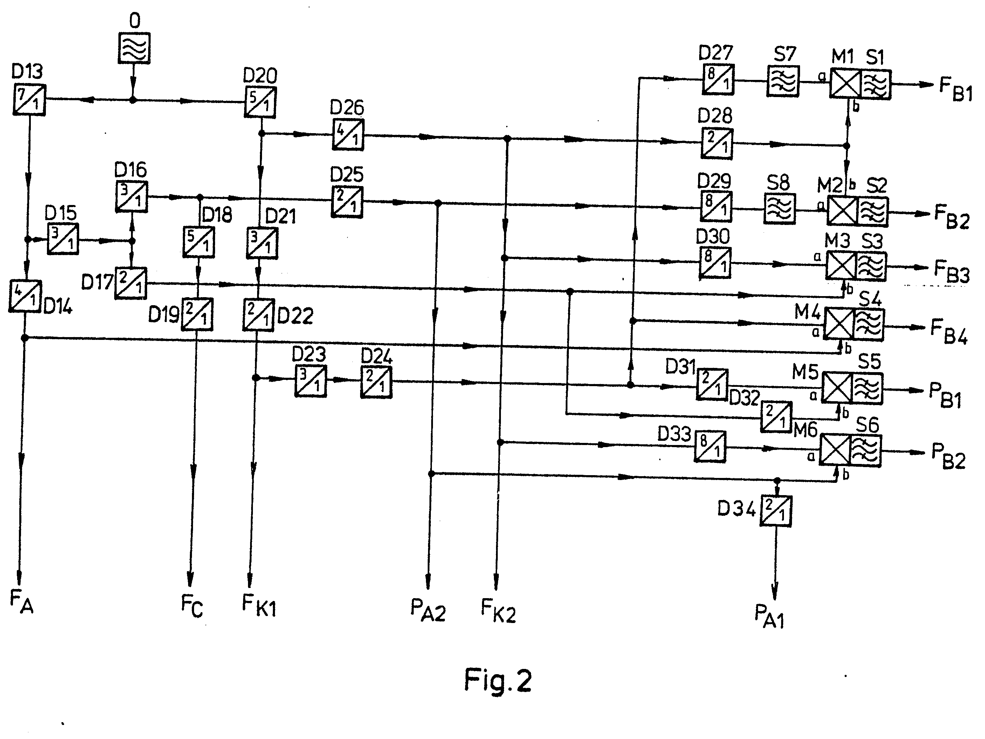

Gleichzeitig wird das Ausgangssignal des Bandfilters SZ2 oder des Bandfilters SZ3 ebenfalls an den Modulator MD geschalten, der dieses mit dem Signal einer der Oszillatoren VO1, VO2, VO3, VO4 mischt. Aus dem Ausgangsspektrum des Modulators MD wählen entsprechend dem Frequenzplan das Bandfilter SZ5 den Oberbandsystemträger $F_{B1}$, das Bandfilter SZ6 den Oberbandsystemträger $F_{B2}$ und das Bandfilter SZ8 den Oberbandsystemträger $F_{B3}$ aus. Die Oberbandpilotfrequenz $P_{B1}$ wird durch den Pilotoszillator PO1 erzeugt, während die Oberbandpilotfrequenz $P_{B2}$ durch den Pilotoszillator PO2, die Unterbandpilotfrequenz $P_{A1}$ durch den Pilotoszillator PO3, die Unterbandpilotfrequenz $P_{A2}$ durch den Pilotoszillator PO4, die Oberbandpilotfrequenz $P_{B3}$ durch den Pilotoszillaotr PO5 und die Oberbandpilotfrequenz $P_{B4}$ durch den Pilotoszillator PO6 entsprechend dem Linienfrequenzplan erzeugt werden. Bei dieser Lösung sind zehn verschiedene unabhängige Quarzoszillatoren erforderlich. Zur Realisierung eines Linienplanes sind gleichzeitig drei Oszillatoren erforderlich. Es besteht weiterhin eine Lösung, bei der alle Frequenzen aus dem Signal eines einzigen Oszillators erzeugt werden, eine solche Schaltungsanordnung ist in Fig. 2 dargestellt. An einen Ausgang eines Steueroszillators O schliessen sich zwei Teiler an, von denen ein Ausgang eines, an den Ausgang eines Teilers D13 mit einem Teilerverhältnis von 7:1 angeschlossenen Teilers D14 mit einem Teilerverhältnis von 4:1 einerseits einen Unterbandsystemträgerausgang $F_A$ darstellt und andererseits an einen Eingang "b" eines, einen Oberbandsystemträger $F_{B4}$ erzeugenden Modulators M4 angeschlossen ist.

Ein gemeinsamer Punkt des Teilers D13 mit einem Teilerverhältnis von 7:1 und des Teilers D14 mit einem Teilerverhältnis von 4:1 ist ein Eingang des Teilers D15

0187969

mit einem Teilerverhältnis von 3:1, ein Ausgang des Teilers D16 mit einem Teilerverhältnis von 3:1 schliesst sich an eine, aus einem Teiler D18 mit einem Teilerverhältnis von 5:1 und einem Teiler D19 mit einem Teilerverhältnis von 2:1 bestehende Kette an, deren Ausgang den Kanalträger-Steuerausgang $F_C$ bildet, ein Ausgang des Teilers D16 mit einem Teilerverhältnis von 3:1 schliesst sich einem Eingang des Teilers D25 mit einem Teilerverhältnis von 2:1 an, dessen Ausgang sich in vier Richtungen verzweigt, und zwar an einen Eingang eines Teilers D29 mit einem Teilerverhältnis von 8:1, an einen Eingang eines Teilers D34 mit einem Teilerverhältnis von 2:1, an einen Eingang "b" eines Modulators M6 sowie an den Unterbandpilotfrequenzausgang $P_{A2}$.

Ein Ausgang eines Teilers D17 mit einem Teilerverhältnis von 2:1 schliesst sich einerseits an einen Eingang "b" eines Modulators M3 und andererseits über einen Teiler D32 mit einem Teilerverhältnis von 2:1 an einen Eingang "b" eines Modulators M5 an. Ein Ausgang eines anderen, an den Ausgang des Steueroszillators O angeschlossenen Teilers D20 mit einem Teilerverhältnis von 5:1 verzweigt sich in zwei Richtungen, und zwar an den Eingang eines Teilers D26 mit einem Teilerverhältnis von 4:1 und an den Eingang eines Teilers D21 mit einem Teilerverhältnis von 3:1.

Der Ausgang des Teilers D26 mit einem Teilerverhältnis von 4:1 verzweigt sich in vier Richtungen, und zwar an den Eingang D28 mit einem Teilerverhältnis von 2:1, an einen Eingang eines Teilers D30 mit einem Teilerverhältnis von 8:1, an einen Eingang eines Teilers D33 mit einem Teilerverhältnis von 8:1 sowie an den Mittelfrequenz-Systemträgerausgang $F_{K2}$. Der Ausgang des Teilers D21 mit einem Teilerverhältnis von 3:1 schliesst sich dem Eingang des Teilers D22 mit einem Teilerverhältnis von 2:1 an, dessen Ausgang einerseits den Mittelfrequenz--Systemträgerausgang $F_{K1}$ bildet und andererseits an den Eingang des Teilers D23 mit einem Teilerverhältnis von 3:1 angeschlossen ist, dessen Ausgang über einen Teiler D24 mit einem Teilerverhältnis von 2:1 mit einem Eingang eines Teilers D27 mit einem Teilerverhältnis von 8:1, einem Eingang eines Teilers D31 mit einem, Teilerverhältnis von 2:1 sowie einem Eingang "a" eines Modulators M4 verbunden ist. Die Ausgänge der Teiler D27, D29 mit einem Teilerverhältnis von 8:1 bilden die Eingänge der Filter S7, S8. Der Ausgang des Teilers D30 mit einem Teilerverhältnis von 8:1 ist mit einem Eingang "a" eines Modulators M3 verbunden, während der Ausgang des Teilers D31 mit einem Teilerverhältnis von 2:1 mit einem Eingang "a" eines Modulators M5, der Ausgang des Teilers D33 mit einem Teilerverhältnis von 8:1 mit einem Eingang "a" eines Modulators M6 verbunden sind. Der Ausgang des Teilers D28 mit einem Teilerverhältnis von 2:1 ist an Eingänge "b" der Modulatoren M1, M2 angeschlossen. Die Ausgänge der Filter S7, S8 schliessen sich den Eingängen "a" der Modulatoren M1, M2 an. Die Modulatoren M1, M2, M3, M4, M5 und M6 bilden über den jeweils zugeordneten Filtern S1, S2, S3, S4, S5, und S6 entsprechend die Oberbandsystemträgerausgänge $F_{B1}...F_{B4}$ und die Oberbandpilotfrequenzausgänge $P_{B1}$, $P_{B2}$.

In Fig. 3 ist die erfindungsgemässe Schaltungsanordnung zur Erzeugung von Systemträgersignalen, Linienpilotfrequenzen und Kanalträger-Steuerfrequenzen von vielkanäligen Freileitungs-Fernsprechanlagen dargestellt.

An einen Ausgang des Steueroszillaotrs O, der gleichzeitig einen Kanalträger-Steuerausgang $F_{C1}$ bildet, sind zwei Frequenzteiler angeschlossen, und zwar ein Frequenzteiler D1 mit einem Teilerverhältnis von 7:1, und ein Frequenzteiler D2 mit einem Teilerverhältnis von 40:1, dessen Ausgang einen Mittelfrequenz-Systemträgerausgang $F_{K1}$ bildet. An einen Ausgang des Frequenzteilers

D1, der gleichzeitig einen Kanalträger-Steuersignalausgang $F_{C2}$ bildet, sind drei Frequenzteiler angeschlossen: ein 16:1 Frequenzteiler D3, dessen Ausgang einerseits mit einem Kanalträger-Steuersignalausgang $F_{C3}$ und andererseits mit einem Eingang eines Filters SZ1 verbunden ist, ein 4:1 Frequenzteiler D4, dessen Ausgang an einen Eingang b eines Modulators M2 und an einen Eingang eines 3:1 Frequenzteilers D5 angeschlossen ist, sowie ein 15:1 Frequenzteiler D6, dessen Ausgang an einen Umkopplungspunkt 12 geführt ist. Ein Ausgang des 3:1 Frequenzteilers D5 ist mit einem Eingang des 2:1 Frequenzteilers D7 und einem Eingang "b" des Modulators M3 verbunden. Der Ausgang des Filters SZ1 bildet den Unterband-Systemträgerausgang $F_A$. Der Ausgang des Frequenzteilers D2 ist weiterhin noch an vier Frequenzteiler angeschlossen, und zwar: einen 4:1 Frequenzteiler D10, dessen Ausgang sich einem 2:1 Frequenzteiler D9 und einem Umkopplungspunkt 4 anschliesst, einen 4:1 Frequenzteiler D12, dessen Ausgang mit einem Filter SZ6 verbunden ist, einen 16:1 Frequenzteiler D13, dessen Ausgang an einen Filter SZ8 geführt ist, sowie einen 2:1 Frequenzteiler D14, dessen Ausgang an einen Eingang eines Filters SZ2 angeschlossen ist. Der Ausgang des Filters SZ2 bildet einen Mittelfrequenz-Systemträgerausgang $F_{K2}$. Der Ausgang des 2:1 Frequenzteilers D7 ist mit dem Unterbandpilotfrequenzausgang $P_{A2}$, einem Umkopplungspunkt 6, einem Eingang b des Modulators M4 und einem Eingang des 2:1 Frequenzteilers D8 verbunden, dessen Ausgang an einen Unterbandpilotfrequenzausgang $P_{A1}$ und an einen Umkopplungspunkt 3 angeschlossen ist. Der Ausgang des Frequenzteilers D9 schliesst sich den Umkopplungspunkten 1, 10 an. Ein Ausgang des Filters SZ6 ist mit einem Eingang a des Modulators M3 verbunden, dessen Ausgang an einen Eingang eines Filters SZ7 geführt ist. Ein Ausgang des Filters SZ7 bildet einen Oberband-

0187969

pilotfrequenzausgang $P_{B1}$. Ein Ausgang eines Filters SZ8 ist mit einem Eingang a des Modulators M4 verbunden, während ein Ausgang des Modulators M4 mit dem Eingang des Filters SZ9 verbunden ist. Der Ausgang des Filters SZ9 bildet einen Oberbandpilotfrequenzausgang $P_{B2}$. Ein Eingang des Filters SZ3 ist an einen Umkopplungspunkt 2 geführt, während der Ausgang des Filters SZ3 an einen Eingang a des Modulators M1 angeschlossen ist. Ein Eingang b des Modulators M1 ist mit einem Umkopplungspunkt 5 verbunden, während ein Ausgang des Modulators M1 an einen Umkopplungspunkt 7 geführt ist. Ein Eingang des Filters SZ4 ist mit einem Umkopplungspunkt 8 verbunden, während ein Ausgang des Filters SZ4 an einen Eingang a des Modulators M2 angelegt ist. Der Ausgang des Modulators M2 ist mit dem Eingang des Filters SZ5 verbunden. Der Ausgang des Filters SZ5 ist an einen Eingang eines 2:1 Frequenzteilers D11 angeschlossen. Der Ausgang des Frequenzteilers D11 bildet einen Oberbandsystemträgerausgang $F_{B1} \ldots F_{B4}$. Von der Verbindung der Umkopplungspunkte 1...12 hängt ab, welche der Frequenzen an diesem Ausgang erscheint. Im Falle der Frequenz $F_{B1}$ sind die Umkopplungspunkte 1-2, 5-6, und 7-8 verbunden, während im Falle der Frequenz $F_{B2}$ die Umkopplungspunkte 2-3, 4-5, und 7-8, im Falle der Frequenz $F_{B3}$ die Umkopplungspunkte 8-9 und 10-11 und im Falle der Frequenz $F_{B4}$ die Umkopplungspunkte 8-9 und 11-12 verbunden sind. /zwischen den nicht benutzten Umkopplungspunkten besteht sinngemäss eine Unterbrechung/

Der wesentliche Vorteil der erfindungsgemässen Schaltungsanordnung besteht in der minimalen Anzahl der Bauelemente im Vergleich zu den bekannten Lösungen. Zwar ist gegenüber der in Fig. 2 dargestellten bekannten Lösung die Anzahl der Filter um Eins grösser, dass wird jedoch dadurch bedeutend kompensiert, dass in der erfindungsgemässen Lösung die Anzahl der verwendeten

0187969

Modulatoren um zwei und die Anzahl der Frequenzteiler um acht verringert wurde. Jedes erwähnte Filter besitzt einen einfachen Aufbau und eine geringe Anzahl von Elementen. Die Filter SZ4 und SZ5 wurden mit dem Modulator M2, die Filter SZ6 und SZ7 mit dem Modulator M3, die Filter SZ8 und SZ9 mit dem Modulator M4 und das Filter SZ3 mit dem Modulator M1 zusammengebaut, wodurch eine bedeutende schaltungstechnische Vereinfachung erreicht wurde.

Der Vorteil bei der Verwendung eines einzigen Oszillators O besteht darin, dass nur ein Thermostat erforderlich ist. Ein weiterer Vorteil gegenüber den, mehrere Oszillatoren verwendenden Systemen besteht darin, dass der für die Trägerstromanlagen vorgeschriebene kleine Frequenzfehler /grosse Genauigkeit und Stabilität/ leichter zu realisieren ist.

Von Vorteil ist weiterhin die Möglichkeit der Auswahl der freien Oberbandsystemträgerfrequenz $F_B$. Die Frequenzteiler können als monolite integrierte Schaltungen ausgebildet sein, oder vorzugsweise mittels MSI Technik ausgeführt werden.

Nachstehend werden die drei Lösungen anhand der Anzahl der verwendeten Bauelemente miteinander verglichen:

| | Fig. 1 | Fig. 2 | Fig. 3 /erfindungs-gemässe Lösung/ |
|---|---|---|---|
| Oszillator | 10 | 1 | 1 |
| Harmonischer Generator oder Frequenzvervielfacher | 3 | 0 | 0 |
| Frequenzteiler | 4 | 22 | 14 |
| Modulator | 1 | 6 | 4 |
| Filter | 8 | 8 | 9 |
| Insgesamt: | 26 | 37 | 28 |

Die an den Ausgängen der einzelnen Schaltungs-

0187969

anordnungen befindlichen Verstärker wurden in keiner der Figuren angeführt, da deren Anzahl von sonstigen Erwägungen abhängt. Die Verstärker werden somit nicht als Systemmerkmale betrachtet.

Patentansprüche

1. Schaltungsanordnung zur Erzeugung von Systemträgern, Linienpilotfrequenzen vielkanäliger Freileitungs--Trägerstrom-Fernsprechanlagen, die aus einem einzigen Oszillator, einer sich an dessen Ausgang anschliessenden Kombination von Frequenzteilern, sich dem Ausgang der Frequenzteiler anschliessenden Filtern, sowie an Ausgänge von Modulatoren angeschlossenen Filtern oder mit einem Ausgang des Filters verbundenen Frequenzteilern besteht, wobei die Ausgänge einzelner Frequenzteiler unmittelbar oder über Filter an Kanalträger-Steuerfrequenzausgänge oder an Systemträger- bzw. Unterbandpilotfrequenzausgänge angeschlossen sind, d a d u r c h    g e k e n n - z e i c h n e t ,   dass die Kombinationen der Frequenzteiler an Oberbandsystemträgerfrequenzen $/F_{B1}...F_{B4}/$ erzeugende Schaltungen umkoppelbar und an Oberbandpilotfrequenzen erzeugende Schaltungen fest angeschlossen sind, dass weiterhin die die Systemträger-frequenzen $/F_{B1}...F_{B4}/$ erzeugenden Schaltungen aus einer Reihenschaltung eines Filters /SZ4/, eines Modulators /M2/, eines weiteren Filters /SZ5/ und eines Frequenzteilers /D11/ mit einem Teilerverhältnis von 2:1 bestehen, während eine, die eine Oberbandpilotfrequenz $/F_{B1}/$ erzeugende Reihenschaltung mit einem Filter /SZ6/, einem Modulator /M3/ und einem weiteren Filter /SZ7/ versehen ist, während eine, die andere Oberbandpilotfrequenz $/F_{B2}/$ erzeugende Reihenschaltung aus einem Filter /SZ8/, einem Modulator /M4/ und einem weiteren Filter /SZ9/ besteht.

2. Schaltungsanordnung nach Anspruch 1, d a d u r c h    g e k e n n z e i c h n e t ,   dass an einen Ausgang des Steueroszillators /O/, der gleich-zeitig einen Ausgang der Kanalträger-Steuereinheit $/F_{C1}/$ darstellt, zwei Frequenzteiler /C1/ angeschlossen sind, und zwar ein 7:1 Frequenzteiler /D1/ und ein 40:1 Frequenzteiler /D2/, wobei ein Ausgang des letzteren einen Mittelfrequenz-Systemträgerausgang /$F_{K1}$/ bildet, desweiteren an einen Ausgang des Frequenzteilers /D1/, der gleichzeitig den Kanalträger-Steuersignalausgang /$F_{C2}$/ bildet, drei Frequenzteiler angeschlossen sind, und zwar ein 16:1 Frequenzteiler /D3/, dessen Ausgang einerseits mit dem Kanalträger-Steuersignalausgang und andererseits mit einem Eingang des Filters /SZ1/ verbunden ist, ein 4:1 Frequenzteiler /D4/, dessen Ausgang an einen Eingang /b/ des Modulators /M2/ und an einen Eingang eines 3:1 Frequenzteilers /D5/ angeschlossen ist, sowie ein 15:1 Frequenzteiler /D6/, dessen Ausgang an einen Umkopplungspunkt /12/ geführt ist, dass weiterhin ein Ausgang des 3:1 Frequenzteilers /D5/ an einen Eingang eines 2:1 Frequenzteilers /D7/ und an den Eingang /b/ des Modulators /M3/ angeschlossen ist, wobei ein Ausgang des Filters /SZ1/ den Unterband-Systemträgerausgang /$F_A$/ bildet, desweiteren der Ausgang des Frequenzteilers /D2/ mit weiteren vier Frequenzteilern verbunden ist, und zwar einem 4:1 Frequenzteiler /D10/, dessen Ausgang sich an einen 2:1 Frequenzteiler /D9/ und an den Umkopplungspunkt /4/ anschliesst, einem 4:1 Frequenzteiler /D12/, dessen Ausgang an einen Filter /SZO/ angeschlossen ist, einem 16:1 Frequenzteiler /D13/, dessen Ausgang mit einem Filter /SZ8/ verbunden ist, sowie einem 2:1 Frequenzteiler /DM/, dessen Ausgang an den Eingang des Filters /SZ2/ angeschlossen ist, wobei ein Ausgang des Filters /SZ2/ einen Mittelfrequenz-Systemträgerausgang /$F_{K2}$/ bildet, dass weiterhin ein Ausgang des 2:1 Frequenzteilers /D7/ mit dem Unterbandpilotfrequenzausgang /$P_{A2}$/, einem Umkopplungspunkt /6/, einem Eingang /b/ des Modulators /M4/ und einem Eingang des 2:1 Frequenz-teilers /$D_8$/ verbunden ist, dass ein Ausgang des 2:1 Frequenzteilers /D8/ an den Unterbandpilotfrequenzausgang /$P_{A1}$/ und an einen Umkopplungspunkt /3/ angeschlossen ist, desweiteren ein Ausgang des Frequenzteilers /D9/ mit Umkopplungspunkten /1, 10/ verbunden ist, dass ein Ausgang des Filters /SZ6/ an einen Eingang /a/ des Modulators /M3/ und ein Ausgang des Modulators /M3/ an einen Eingang des Filters /SZ7/ angeschlossen ist, während ein Ausgang des Filters /SZ7/ den Oberbandpilotfrequenzausgang /$P_{B1}$/ bildet, dass weiterhin ein Ausgang des Filters /SZ8/ an einen Eingang /a/ des Modulators /M4/ und ein Ausgang des Modulators /M4/ an einen Eingang des Filters /SZ9/ geführt ist, während ein Ausgang des Filters /SZ9/ den Oberbandpilotfrequenzausgang /$P_{B2}$/ bildet, desweiteren ein Eingang des Filters /SZ3/ mit einem Umkopplungspunkt /2/ verbunden ist, während ein Ausgang des Filters /SZ3/ an einen Eingang /a/ des Modulators /M1/ angeschlossen ist, dass ein Eingang /b/ des Modulators /M1/ mit einem Umkopplungspunkt /5/ und ein Ausgang des Modulators /M1/ mit einem Umkopplungspunkt /7/ verbunden ist, desweiteren ein Eingang des Filters /SZ4/ an einen Umkopplungspunkt /8/ und ein Ausgang des Filters /SZ4/ an den Eingang /a/ des Modulators /M2/ angeschlossen ist, weiterhin ein Ausgang des Modulators /M2/ mit einem Eingang des Filters /SZ5/ verbunden ist, dessen Ausgang an den 2:1 Frequenzteiler /D11/ angeschlossen ist, dass der Ausgang des Frequenzteilers /D11/ den Oberbandsystemträgerausgang /$F_B$/ bildet, wobei in Abhängigkeit von der Umkopplung der Umkopplungspunkte /1...12/ am Ausgang /$F_B$/ verschiedene Frequenzen erscheinen, d.h. bei Verbindung der Umkopplungspunkte /1-2, 5-6 und 7-8/ die Frequenz /$F_{B1}$/, bei Verbindung der Umkopplungspunkte /2-3, 4-5, und 7-8/ die Frequenz /$F_{B2}$/, bei Verbindung der Umkopplungspunkte /8-9 und 10-11/ die Frequenz /$F_{B3}$/ und bei Verbindung der Umkopplungspunkte /8-9, und 11-12/ die Frequenz /$F_{B4}$/, während zwischen den anderen Umkopplungspunkten sinngemäss eine Unterbrechung besteht.
/Fig. 3/

Fig.1.

Fig.2

Fig.3

0187969

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 445 063 (TELEFONGYAR) <br> * Insgesamt * | 1,2 | H 04 J 1/06 |
| A | EP-A-0 084 462 (TELEFONGYAR) <br> * Insgesamt * | 1,2 | |
| A | ERICSSON REVIEW, Band 44, Nr. 1, 1967, Seiten 34-52, Telefonaktiebolaget L.M. Ericsson, Stockholm, SE; N. TANGEN et al.: "Centralized fundamental and pilot frequency generating equipment for carrier terminals" <br> * Seite 34 - Seite 35, Zeile 26; Seite 36, Zeile 5 - Seite 39, Zeile 9 * | 1,2 | |
| A | DE-A-2 817 788 (TEKADE) <br> * Seite 3, Zeile 10 - Seite 4, Zeile 12; Seite 4, Zeile 20 - Seite 6, Zeile 24 * | 1,2 | **RECHERCHIERTE SACHGEBIETE (Int. Cl.4)** <br><br> H 04 J <br> H 03 B |

Der vorliegende Recherchenbericht wurde für alle Patentansprüche erstellt.

| Recherchenort | Abschlußdatum der Recherche | Prüfer |
|---|---|---|
| DEN HAAG | 26-03-1986 | GERLING J.C.J. |